Europäisches Patentamt

European Patent Office

Office européen des brevets

(11) Veröffentlichungsnummer: **0 367 960**
**A2**

## (12) EUROPÄISCHE PATENTANMELDUNG

(21) Anmeldenummer: **89117557.2**

(22) Anmeldetag: **22.09.89**

(51) Int. Cl.5: **F02B 75/20, B60K 17/22**

(30) Priorität: **10.11.88 DE 3838073**

(43) Veröffentlichungstag der Anmeldung:
**16.05.90 Patentblatt 90/20**

(84) Benannte Vertragsstaaten:
**DE FR GB IT SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Von Sivers, Rolf, Dipl.-Ing.FH**
**Gebersheimer Strasse 7/1**
**D-7255 Rutesheim(DE)**
Erfinder: **Hermann, Rudolf, Dipl.-Ing.**
**Schafbaumweg 6**
**D-7251 Wimsheim(DE)**

(54) **Mehrzylindrige Brennkraftmaschine.**

(57) Diese Brennkraftmaschine in Reihenbauweise, z.B. sechs Zylinder umfassend, ist quer im Bug eines Kraftfahrzeugs angeordnet. Sie weist ein Motorgehäuse mit einer ersten und einer zweiten Stirnwand auf. Die erste Stirnwand ist weitgehend geschlossen und frei von Abtriebsvorrichtungen. Diese sind mit dem Kurbelwellenschwungrad an der zweiten Stirnwand angeordnet und wirken mit einer Nockenwelle, mit Nebenaggregaten und einer Kupplung zusammen. Der Kupplung ist ein Primärtrieb nachgeschaltet, der mit einem Wechselgetriebe zusammenarbeitet.

Diese Brennkraftmaschine zeichnet sich durch Laufruhe und geringen Raumbedarf aus.

FIG.1

EP 0 367 960 A2

## Mehrzylindrige Brennkraftmaschine

Die Erfindung betrifft eine mehrzylindrige Brennkraftmaschine nach dem Oberbegriff der Patentansprüche 1 und 20.

Eine bekannte Brennkraftmaschine, (DE-PS 811 180), ist quer in ein Kraftfahrzeug eingebaut, wobei auch das Kurbelgehäuse und das Getriebe entsprechend ausgerichtet sind.

Aufgabe der Erfindung ist es, eine mehrzylindrige Brennkraftmaschine für ein Kraftfahrzeug so zu gestalten, daß sie auch beim Einbau quer zur Fahrzeuglängsrichtung relativ wenig Raum beansprucht und im Fahrbetrieb bei reduzierter Luftschallabstrahlung schwingungstechnisch günstige Werte aufweist.

Erfindungsgemäß wird diese Aufgabe durch die kennzeichnenden Merkmale der Patentansprüche 1 und 20 gelöst. Weitere, die Erfindung ausgestaltende Merkmale sind in den diesen Ansprüchen folgenden Unteransprüchen enthalten.

Die mit der Erfindung hauptsächlich erzielten Vorteile sind darin zu sehen, daß die Brennkraftmaschine in ihrer Längserstreckung wenig Raum beansprucht und sich deshalb auch für den Quereinbau eignet, selbst dann, wenn sie sechs Zylinder in Reihe aufweist; eine Bauweise, die sich durch besondere Laufruhe auszeichnet. Dabei wird die Luftschallabstrahlung deutlich reduziert, weil die erste Stirnwand des Motorgehäuses weitgehend geschlossen und frei von Abtriebsvorrichtungen ist. Die Abtriebsvorrichtungen für Kupplung, Nockenwelle und Nebenaggregate sind an der zweiten Stirnseite angebracht und zwar dort, wo das Kurbelwellen-Schwungrad angeordnet ist, also im Bereich geringster Drehschwingungen - $\theta_{min}$ - was das Schwingungsverhalten der Brennkraftmaschine zusatzlich gunstig beeinflußt. Bie Zwischenwelle schafft räumlich und antriebstechnisch vorteilhafte Voraussetzungen für den Antrieb der Nebenaggregate und der Nockenwelle.

Der Primärtrieb bildet an der zweiten Stirnwand eine leicht realisierbare, raumsparende und gut wirksame Verbindung zwischen Kupplung und Getriebe. Zu seiner Lagerung dient ein Lagerkörper, der mit dem Motorgehäuse und einem Getriebegehäuse verschraubt ist. Primärantrieb, Lagerkörper und Kupplung sind mit einer Kunststoff-Abdeckung verkleidet, die entkoppelt am Motorgehäuse und Getriebegehäuse befestigt ist.

Die Brennkraftmaschine ist entgegen der Fahrtrichtung geneigt im Kraftfahrzeug angeordnet, wodurch ihre Bauhöhe niedrig gehalten werden kann. Die Anordnung der Nebenaggregate und des Saugrohrs an der Vorderseite der Brennkraftmaschine ermöglicht eine weitgehend freie Gestaltung der Saugrohranlage und erfordert keine Vorrichtungen gegen Wärmestrahlung, dann zum Beispiel, wenn Nebenaggregate in der Nähe einer Abgasanlage angeordnet sind. Durch die Art der Anordnung der Nebenaggregate wird ihre Lagerung vereinfacht, wobei auch aufwendige Lagerschilder der Nebenaggregate entfallen.

An der Rückseite der Brennkraftmaschine ist die Auspuffanlage angebracht, und zwar derart, daß die im Fahrbetrieb auftretenden Relativbewegungen zwischen brennkraftmaschinenseitigen Rohrabschnitten und der übrigen Auspuffanlage gut ausgeglichen werden.

Die Lagerung der Brennkraftmaschine an den Pendellagern schafft gute schwingungstechnische Voraussetzungen und Montagebedingungen, wobei ihre Lage die Verbindung zu festen Aufbauteilen vereinfacht. Dies gilt auch für die Drehmomentstützen, die mit gewünscht großem Abstand zueinander verlaufen und durch ihre Anbringung an der ersten Stirnwand des Motorgehäuses benachbart von Aufbaustrukturen verlaufen und folglich einfach befestigbar sind.

Schließlich eignet sich diese Brennkraftmaschinenanordnung auch für ein allradgetriebenes Fahrzeug, weil an das dem Wechselgetriebe nachgeschaltete Differentialgetriebe problemlos ein Winkelgetriebe anbaubar ist. Letzteres besitzt schwingungstechnisch vorteilhafte Eigenschaften, weil es neben der Lagerung am Differentialgetriebe auch noch mit einer Konsole an der Brennkraftmaschine gehalten ist und darüber hinaus einen relativ kurzen Lagerhals umfaßt.

In der Zeichnung werden Ausführungsbeispiele der Erfindung gezeigt, die nachstehend näher beschrieben sind.

Es zeigt

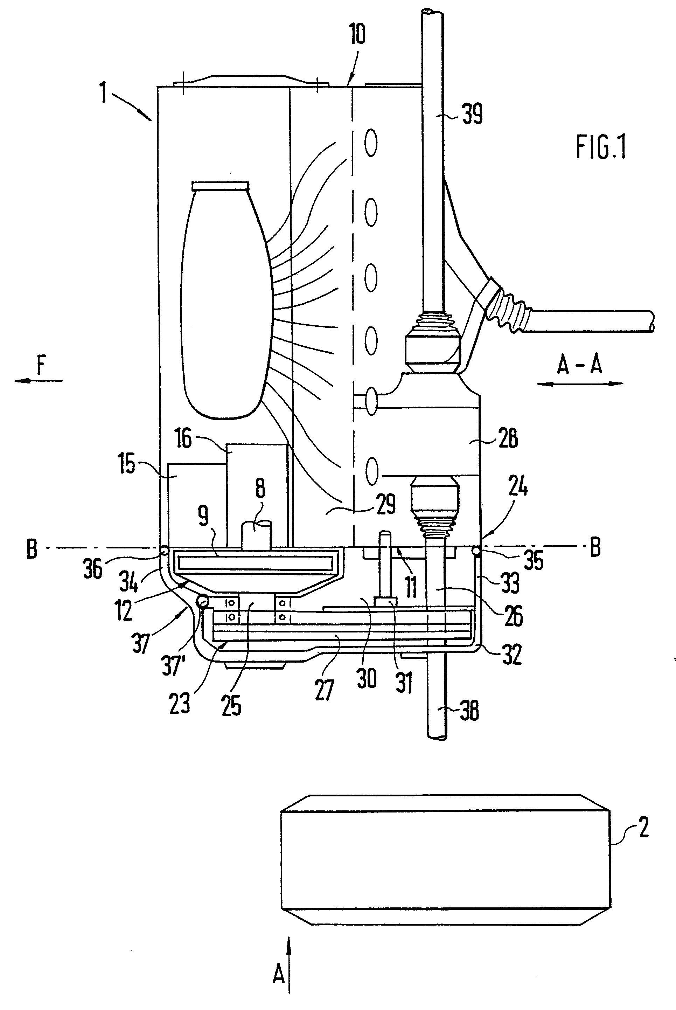

Fig. 1 eine schematische Ansicht von oben auf eine Brennkraftmaschine mit verblocktem Getriebe, die quer in ein Kraftfahrzeug eingebaut ist,

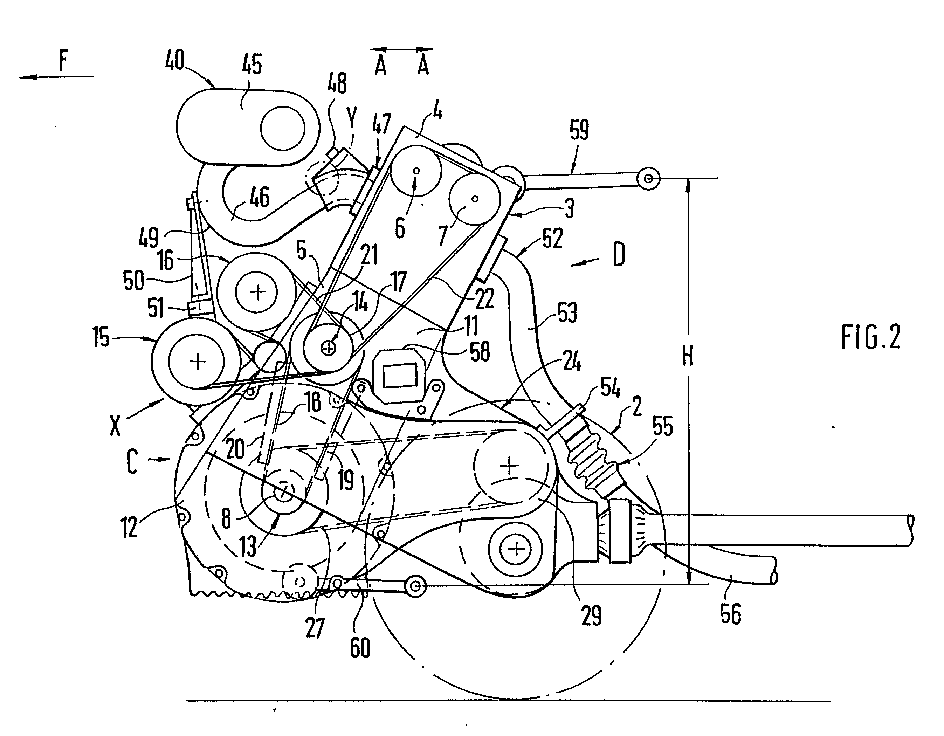

Fig. 2 eine Ansicht in Pfeilrichtung A der Fig. 1 in geringfügig anderem Maßstab,

Fig. 3 eine Einzelheit X der Fig. 2 in größerem Maßstab,

Fig. 4 eine Ansicht entsprechend Fig. 3 mit einem anderen Ausführungsbeispiel

Fig. 5 eine Einzelheit Y der Fig. 2 in größerem Maßstab,

Fig. 6 eine Ansicht entsprechend Fig. 2 einer weiteren Ausführungsform.

Eine Brennkraftmaschine 1 ist quer zur Fahrzeuglängsrichtung A-A in ein Kraftfahrzeug eingebaut, von dem lediglich Vorderräder 2 dargestellt sind; die Fahrtrichtung des Kraftfahrzeugs ist mit F bezeichnet.

Die Brennkraftmaschine 1 der Hubkolbenbauart arbeitet im Viertakt-Verfahren, wobei ihre Zylinder, beispielsweise sechs, in Reihe angeordnet sind. Sie wirkt je nach getriebeseitiger Ausgestaltung auf die Vorderräder 2 und/oder die Hinterräder des Kraftfahrzeugs.

Gebildet wird die Brennkraftmaschine 1 durch ein Motorgehäuse 3, das einen Zylinderkopf 4 und ein Zylinderkurbelgehäuse 5 umfaßt. In den Zylinderkopf 4 sind zwei obenliegende Nockenwellen 6, 7 eingesetzt, die jeweils zwei Einlaß- und zwei Auslaßventile pro Zylinder betätigen - Vierventiltechnik -. Das eine Kurbelwelle 8 mit Schwungrad 9 besitzende Motorgehäuse 3 weist eine erste Stirnwand 10 und eine zweite Stirnwand 11 auf. Das Schwungrad 9 ist benachbart der zweiten Stirnwand 11 angeordnet und Bestandteil einer Kupplung 12. Die erste Stirnwand 10 ist weitgehend geschlossen und frei von Abtriebsvorrichtungen. Abtriebsvorrichtungen 13, 14 sind hingegen an der zweiten Stirnwand 11 angeordnet, also dort, wo das Schwungrad 9 ist; sie wirken mit Nebenaggregaten 15, 16, den Nockenwellen 6, 7 und der Kupplung 12 zusammen und werden gebildet durch die Kurbelwelle 8 und eine Zwischenwelle 17. Die Zwischenwelle 17 ist zwischen Kurbelwelle 8 und Zylinderkopf 4 am Zylinderkurbelgehäuse 5 drehbar gelagert und wird von der Kurbelwelle 8 über ein Endlosglied 18, z.B. Kette, angetrieben. Mit 19 und 20 sind Spannvorrichtungen bezeichnet, die auf die Kette einwirken. Außerdem treibt die Zwischenwelle 17 einerseits die Nebenaggregate 15, 16 an, die im Ausführungsbeispiel eine Lichtmaschine und ein Klimakompressor sind und andererseits die Nockenwellen 6, 7 und zwar mit Endlosgliedern 21, 22. Das Endlosglied 21 ist ein Riemen; das Endlosglied 22 eine Kette.

Der Kupplung 12 nachgeschaltet ist ein Primärtrieb 23, der parallel zur zweiten Stirnwand 11 verläuft und auf ein Wechselgetriebe 24 wirkt. Der Primärtrieb 23 umfaßt eine Eingangswelle 25 und eine Ausgangswelle 26: beide sind mit nicht gezeigten Rädern verbunden, die mit einem Endlosglied 27 in Wirkverbindung sind. Das Endlosglied 27 kann eine Vielfachkette sein. Das Wechselgetriebe 24 wirkt mit einem Differentialgetriebe 28 zusammen, das dem Winkelgetriebe 24 nachgeschaltet ist.

Ein Getriebegehäuse 29 des Wechselgetriebes 24 erstreckt sich entlang dem Motorgehäuse 3 und wird durch eine Ebene B-B begrenzt, die die zweite Stirnwand 11 einschließt. Dabei sind das Zylinderkurbelgehäuse 5 und das Getriebegehäuse 29 aus einem Stück hergestellt, was zur baulichen und Montage-Vereinfachung beiträgt.

Zwischen Kupplung 12 und Primärtrieb 23 ist ein Lagerkörper 30 vorgesehen, der die Eingangswelle 25 und die Ausgangswelle 26 aufnimmt. Der Lagerkörper 30 besteht aus einer Leichtmetall-Legierung, Grauguß oder dergleichen und erstreckt sich parallel zur Ebene B-B der zweiten Stirnwand 11, wobei er mit dem Motorgehäuse 3 und dem Getriebegehäuse 29 durch Schrauben 31 verbunden ist.

Der Primärtrieb 23 und die Kupplung 12 sind mit einer Abdeckung 32 verkleidet, die im Querschnitt trogförmig ist und aus Kunststoff besteht. Die Abdeckung 32 ist mit Wandabschnitten 33, 34 an das Motorgehäuse 3 bzw. das Getriebegehäuse 29 herangeführt, wobei zwischen diesen Wandabschnitten und diesen Gehäusen elastische Elemente 35, 36 vorgesehen sind. Bei 37 ist die Abdeckung 32 an den Lagerkörper 30 herangeführt; zwischen Abdeckung 32 und Lagerkörper 30 ist ein weiteres elastisches Dichtelement 37 angeordnet.

Das Differentialgetriebe 28 kann innerhalb des Getriebegehäuses 29 untergebracht sein und wirkt über Antriebswellen 38, 39 auf die Vorderräder 2.

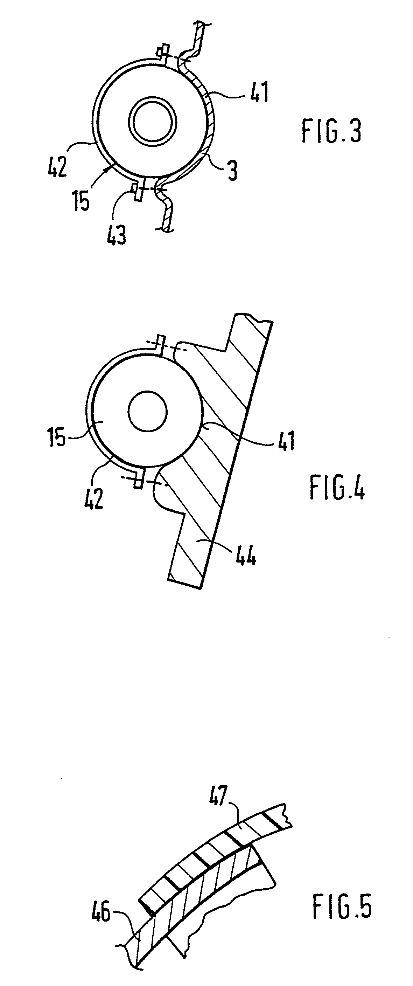

Die Brennkraftmaschine 1 ist entgegen der Fahrtrichtung F geneigt angeordnet (genauer gesagt ihre Zylinder), wobei an ihrer Vorderseite C die Nebenaggregate 15, 16 und eine Ansauganlage 40 angebracht sind. Die Nebenaggregate 15, 16, die ja durch eine Lichtmaschine und einen Klimakompressor dargestellt sind, weisen eine kreiszylindrische Außenform auf, für die am Motorgehäuse 3 korrespondierende Einformungen 41 eingearbeitet sind (Fig. 3). Die Einformungen 41 umschließen teilweise den Außenmantel der Nebenaggregate, die unter Vermittlung von Spannbändern 42 und Schrauben 43 direkt am Motorgehäuse 3 in Lage gehalten sind. Es besteht auch die Möglichkeit zur Aufnahme der Nebenaggregate 15, 16 eine Flanschkonsole 44 vorzusehen, die ebenfalls die Einformungen 41 besitzt, wobei sie mit Schrauben am Motorgehäuse 3 gehalten ist.

Die Ansauganlage 40 wird gebildet durch einen Sammler 45 und Saugrohre 46, die unter Vermittlung von Rohrstücken 47, die zu einer Einheit zusammengefaßt sein können, an den Zylinderkopf 4 angeschlossen sind. Die mit Schrauben am Zylinderkopf 4 befestigten Rohrstücke 47 umgreifen teilweise die Saugrohre 46 (Fig. 5), bestehen aus nachgiebigem Werkstoff wie Gummi, Kunststoff oder dergleichen und tragen ein oder mehrere Einspritzventile 48. An einem der Rohrbögen 49 der Saugrohre 46, die einen etwa horizontalen Abstand zu den Rohrstücken 47 aufweisen, greift eine Saugrohrstütze 50 an, die unter Vermittlung eines elastischen Gliedes 51 an einem festen Bauteil der Brennkraftmaschine 1, hier das Nebenaggregat 15, gehalten ist.

An der Rückseite D der Brennkraftmaschine 1 ist eine Auspuffanlage 52 angeordnet, die am Zylinderkopf 4 befestigt ist. Dabei sind ein oder mehrere Rohrabschnitte 53 der Auspuffanlage 52 fest an der Brennkraftmaschine 1 bzw. dem Getriebegehäuse 29 gehalten, wofür ein Abstützglied 54 dient. Dem Abstützglied 54 stromabwärts der Auspuffanlage 52 nachgeschaltet ist ein metallisches Abkoppelelement 55, über das Relativbewegungen zwischen den Rohrabschnitten 53 und einem Rohrabschnitt 56 der Auspuffanlage 52 ausgeglichen werden.

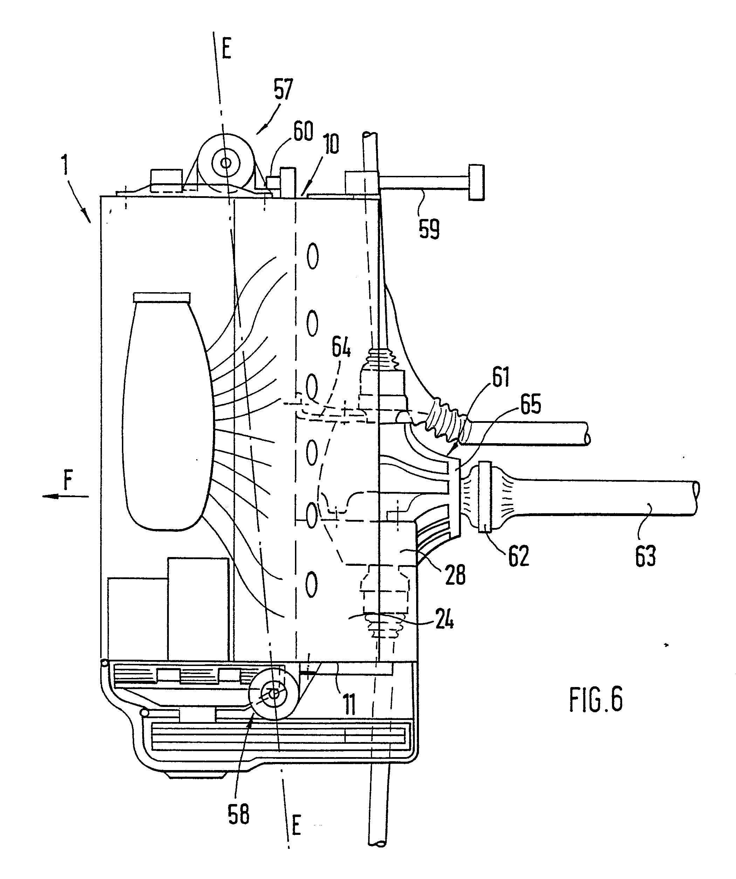

Zur hängenden Lagerung der Brennkraftmaschine 1 dienen zwei Pendellager 57, 58, die benachbart der Trägheitsachse E-E der Brennkraftmaschine 1 angeordnet sind (Fig. 6). Im Ausführungsbeispiel sind die Pendellager 57, 58 benachbart der ersten Stirnwand 10 und zweiten Stirnwand 11 festgelegt. Außerdem ist die Brennkraftmaschine 1 mit zwei Drehmomentstützen 59, 60 verbunden, die etwa horizontal ausgerichtet sind und in senkrechter Fahrzeughöhe gesehen mit Abstand H - relativ große Basis - zueinander verlaufen. Darüber hinaus greifen die Brehmomentstützen 59, 60 einerseits an der ersten Stirnwand 11 der Brennkraftmaschine 1 an und andererseits sind sie mit festen Aufbauteilen des Kraftfahrzeugs verbunden.

Bei einer weiteren Ausführungsform ist dem Wechselgetriebe 24 bzw. Differentialgetriebe 28 ein Winkelgetriebe 61 nachgeschaltet, das unter Vermittlung einer Entkopplungseinrichtung 62, es ist eine elastische Gelenkscheibe, mit einer mehrfach geteilten Kardanwelle 63 verbunden ist; die Brennkraftmaschine 1 wirkt somit auf vier Räder.

Das Winkelgetriebe 61 ist nicht nur am Differentialgetriebe 28 oder Getriebegehäuse 29 mit Schrauben gehalten, sondern auch noch am Motorgehäuse der Brennkraftmaschine 1 und zwar mit einer Konsole 64, die sich auf der freien Seite des Winkelgetriebes 61 erstreckt und eine dynamische Winkeltriebanbindung bildet.

Schließlich weist das Winkelgetriebe 61 einen relativ kurzen, jedoch eine tragfähige Lagerbasis sicherstellenden Lagerhals 65 auf, der an die Kardanwelle 63 herangeführt ist. Eine vergleichbare Lösung ist in der DE-PS 35 06 727 beschrieben.

## Ansprüche

1. Mehrzylindrige Brennkraftmaschine der Hubkolbenbauart für ein Kraftfahrzeug, die vorzugsweise in Reihe angeordnete Zylinder aufweist, quer im Bug eingebaut ist und zumindest die Vorderräder antreibt, wobei die Nebenaggregate, eine Kupplung und ein auf ein Differentialgetriebe wirkendes Wechselgetriebe umfassende Brennkraftmaschine durch ein eine Kurbelwelle mit Schwungrad besitzendes, mit einer ersten und einer zweiten Stirnwand versehenes sowie einen Zylinderkopf mit wenigstens einer Nockenwelle und ein Zylinderkurbelgehäuse einschließendes Motorgehäuse gebildet wird, **dadurch gekennzeichnet,** daß die erste Stirnwand (10) weitgehend geschlossen und frei von Abtriebsvorrichtungen ist, wogegen an der zweiten Stirnwandseite (11) das Schwungrad (9) und Abtriebsvorrichtungen (13, 14) für die Nockenwelle (6, 7), Nebenaggregate (15, 16) und die Kupplung (12) vorgesehen sind, die unter Vermittlung eines Primärtriebs (23) auf das Wechselgetriebe wirkt.

2. Mehrzylindrige Brennkraftmaschine nach Anspruch 1, **dadurch gekennzeichnet,** daß die Abtriebsvorrichtungen (13, 14) durch die Kurbelwelle (8) und eine zwischen Kurbelwelle (8) Zylinderkopf (4) vorgesehene Zwischenwelle (17) dargestellt sind, die mit der Kurbelwelle (8) vorzugsweise über ein Endlosglied (18) in Wirkverbindung ist.

3. Mehrzylindrige Brennkraftmaschine nach Anspruch 2, **dadurch gekennzeichnet,** daß die Zwischenwelle (17) die Nebenaggregate (15, 16) und die Nockenwelle (6, 7) vorzugsweise über Endlosglieder (21, 22) antreibt.

4. Mehrzylindrige Brennkraftmaschine nach Anspruch 1, **dadurch gekennzeichnet,** daß ein Getriebegehäuse (29) des Wechselgetriebes (24) sich entlang dem Motorgehäuse (3) erstreckt und durch eine die zweite Stirnwand (11) einschließende Ebene (B-B) begrenzt ist.

5. Mehrzylindrige Brennkraftmaschine nach den Ansprüchen 1 und 4, **dadurch gekennzeichnet,** daß das Zylinderkurbelgehäuse (5) und das Getriebegehäuse (29) aus einem Stück hergestellt sind.

6. Mehrzylindrige Brennkraftmaschine nach einem oder mehreren der vorangehenden Ansprüche, **dadurch gekennzeichnet,** daß zwischen Kupplung (12) und Primärtrieb (23) ein eine Eingangswelle (25) und eine Ausgangswelle (26) des Primärtriebs (23) lagernder Lagerkörper (30) verläuft.

7. Mehrzylindrige Brennkraftmaschine nach Anspruch 6, **dadurch gekennzeichnet,** daß der sich parallel zur Ebene (B-B) der zweiten Stirnwand (11) erstreckende Lagerkörper (30) unter Vermittlung von Schrauben (31) am Motorgehäuse (2) und/oder Getriebegehäuse (29) befestigt ist.

8. Mehrzylindrige Brennkraftmaschine nach einem oder mehreren der vorangehenden Ansprüche, **dadurch gekennzeichnet,** daß die Kupplung (12) und der Primärtrieb (23) von einer beispielsweise aus Kunststoff hergestellten, im Querschnitt trogförmigen Abdeckung (32) umgeben ist, die entkoppelt am Motorgehäuse (2) und Getriebegehäuse (29) gehalten ist.

9. Mehrzylindrige Brennkraftmaschine nach Anspruch 1, **dadurch gekennzeichnet,** daß die Brennkraftmaschine (1) entgegen der Fahrtrichtung (F) des Kraftfahrzeugs geneigt angeordnet ist.

10. Mehrzylindrige Brennkraftmaschine nach den Ansprüchen 1 und 10, **dadurch gekennzeichnet,** daß an der Vorderseite (C) der Brennkraftmaschine (1) die Nebenaggregate (15, 16) und eine Ansauganlage (40) vorgesehen sind.

11. Mehrzylindrige Brennkraftmaschine nach einem oder mehreren der vorangehenden Ansprüche, **dadurch gekennzeichnet,** daß zur Aufnahme der Nebenaggregate (15, 16) wie Lichtmaschine, Klimakompressor oder dergleichen, die eine kreiszylindrische Außenform aufweisen, am Motorgehäuse (3) korrespondierende kreiszylindrische Einformungen (41) eingearbeitet sind, wobei zur Halterung der Nebenaggregate (15, 16) Spannbänder (42) dienen.

12. Mehrzylindrige Brennkraftmaschine nach Anspruch 11, **dadurch gekennzeichnet,** daß die Einformungen (41) in das Motorgehäuse (3) integriert sind.

13. Mehrzylindrige Brennkraftmaschine nach Anspruch 11, **dadurch gekennzeichnet,** daß die Einformungen (41) Bestandteil einer Flanschkonsole (44) sind, die am Motorgehäuse (3) durch Schrauben befestigt ist.

14. Mehrzylindrige Brennkraftmaschine nach Anspruch 10, **dadurch gekennzeichnet,** daß die Saugrohre (46) der Ansauganlage (40) einerseits unter Vermittlung eines aus nachgiebigem Werkstoff wie Gummi, Kunststoff oder dergleichen bestehenden Rohrstück (47) an den Zylinderkopf (4) angeschlossen ist und sich andererseits mit einer Saugrohrstütze (50) an einem festen Bauteil (Nebenaggregate 15) der Brennkraftmaschine (1) abstützt, wobei zwischen dem Bauteil (Nebenaggregat 15) und Saugrohrstütze (50) ein elastisches Glied (51) angeordnet ist.

15. Mehrzylindrige Brennkraftmaschine nach Anspruch 9, **dadurch gekennzeichnet,** daß an der Rückseite (D) der Brennkraftmaschine (1) eine Auspuffanlage (52) angeordnet ist, wobei einem oder mehreren fest an der Brennkraftmaschine (1) bzw. am Getriebegehäuse (29) abgestützten Rohrabschnitt (53) der Auspuffanlage (52) stromabwärts ein metallisches Abkoppelelement (55) nachgeschaltet ist.

16. Mehrzylindrige Brennkraftmaschine nach Anspruch 1, **dadurch gekennzeichnet,** daß die Brennkraftmaschine (1) an zwei Pendellagern (57, 58) hängt, die benachbart der Trägheitsachse (E-E) der Brennkraftmaschine (1) angeordnet sind.

17. Mehrzylindrige Brennkraftmaschine nach den Ansprüchen 1 und 16, **dadurch gekennzeichnet,** daß die Pendellager (57, 58) benachbart der ersten und der zweiten Stirnwand (10, 11) angeordnet sind.

18. Mehrzylindrige Brennkraftmaschine nach den Ansprüchen 1 und 6, **dadurch gekennzeichnet,** daß die Brennkraftmaschine (1) mit zwei in senkrechter Fahrzeughöhe (Abstand H) beabstandete, etwa horizontal ausgerichtete Drehmomentstützen (59, 60) zusammenwirkt.

19. Mehrzylindrische Brennkraftmaschine nach Anspruch 18, **dadurch gekennzeichnet,** daß die Drehmomentstützen (59, 60) benachbart der ersten Stirnwand (10) an der Brennkraftmaschine (1) angreifen.

20. Mehrzylindrige Brennkraftmaschine der Hubkolbenbauart, die in Reihe angeordnete Zylinder aufweist, quer im Bug eingebaut ist und die Vorderräder und/oder Hinterräder antreibt, wobei die Nebenaggregate eine Kupplung und ein auf ein Differentialgetriebe wirkendes Wechselgetriebe umfassende Brennkraftmaschine durch ein eine Kurbelwelle mit Schwungrad enthaltendes, mit einer ersten und einer zweiten Stirnwand versehenes, sowie einen Zylinderkopf mit wenigstens einer Nockenwelle und einem Zylinderkurbelgehäuse einschließendes Motorgehäuse gebildet wird, **gekennzeichnet** durch folgende Merkmale:
- die erste Stirnwand (10) ist weitgehend geschlossen und frei von Abtriebsvorrichtungen;
- an der zweiten Stirnwand (11) sind das Schwungrad (9) und Abtriebsvorrichtungen (13, 14) für die Nockenwelle (6, 7), die Nebenaggregate (15, 16) und die Kupplung (12) vorgesehen;
- die Kupplung (12) wirkt unter Vermittlung eines Primärtriebs (23) auf das Wechselgetriebe (24);
- die Abtriebsvorrichtungen (13, 14) werden durch die Kurbelwelle (8) und eine zwischen Kurbelwelle (8) und Zylinderkopf (4) vorgesehene Zwischenwelle (17) gebildet;
- die Zwischenwelle (17) ist mit der Kurbelwelle (8) über ein Endlosglied (18) wie z.B. Kette in Wirkverbindung;
- die Zwischenwelle (17) treibt die Nebenaggregate (15, 16) und die Nockenwelle (6, 7) über Endlosglieder (21, 22) wie Ketten, Riemen oder dergleichen an;
- ein Getriebegehäuse (29) des Wechselgetriebes (24) erstreckt sich entlang dem Motorgehäuse (3) und ist durch eine die zweite Stirnwand (11) einschließende Ebene (11) begrenzt;
- die Brennkraftmaschine (1) ist entgegen der Fahrtrichtung (F) des Kraftfahrzeugs geneigt angeordnet;
- an der Vorderseite (C) der Brennkraftmaschine (1) sind die Nebenaggregate (15, 16) und eine Ansauganlage (40) vorgesehen;
- an der Rückseite (D) der Brennkraftmaschine (1) ist die Auspuffanlage (52) angeordnet.

21. Mehrzylindrige Brennkraftmaschine nach einem oder mehreren der vorangehenden Ansprüche, **dadurch gekennzeichnet,** daß dem Wechselgetriebe (24) bzw. Differentialgetriebe (28) ein Winkelgetriebe (61) nachgeschaltet ist, das unter Vermittlung einer Entkoppeleinrichtung (62) wie z.B. elastische Gelenkscheibe mit einer Kardanwelle (63) verbunden ist.

22. Mehrzylindrige Brennkraftmaschine nach Anspruch 21, **dadurch gekennzeichnet,** daß das Winkelgetriebe (61) einerseits am Wechselgetriebe (24) bzw. Differentialgetriebe (28) und andererseits mittels einer Konsole (64) an der Brennkraftmaschine (1) gehalten ist.

23. Mehrzylindrige Brennkraftmaschine nach Anspruch 22, **dadurch gekennzeichnet,** daß das Winkelgetriebe (61) mit einem relativ kurzen, jedoch eine tragfähige Lagerbasis sicherstellenden Lagerhals (65) an die Kardanwelle (63) herangeführt ist.

FIG.1

FIG.2

FIG.3

FIG.4

FIG.5

FIG.6